# EUROPÄISCHE PATENTSCHRIFT

(11) **EP 1 531 359 B1**
(45) Veröffentlichungstag und Bekanntmachung des Hinweises auf die Patenterteilung: **18.07.2007**
(21) Anmeldenummer: 03104202.1
(22) Anmeldetag: 14.11.2003
(51) Int. Cl.: G03B 42/04

(54) **Kassette für eine Speicherleuchtstoffplatte**
Cassette for a stimulable storage phosphor plate
Cassette pour un écran d'enregistrement luminescent stimulable

(43) Veröffentlichungstag der Anmeldung: 18.05.2005
(73) Patentinhaber: Agfa-Gevaert HealthCare GmbH, 51373 Leverkusen (DE)
(72) Erfinder: Schindlbeck, Günther, 81545, München (DE); Stahl, Werner, 85551, Heimstetten (DE); Klabunde, Olaf, 85635, Höhenkirchen-Siegertsbrunn (DE)
(74) Vertreter: Linsmeier, Josef

(56) Entgegenhaltungen:
- EP-A- 1 324 117
- US-A- 3 916 206
- US-A- 4 889 989
- US-A- 5 265 865

## Beschreibung

Die Erfindung betrifft eine Kassette, insbesondere eine Röntgenkassette, nach dem Oberbegriff des Anspruchs 1 zur Aufnahme einer Speicherleuchtstoffplatte.

Eine Kassette der eingangs genannten Art wird insbesondere bei der Bilderzeugung mit Röntgenstrahlen, beispielsweise für medizinische Zwecke, eingesetzt. Die Kassette dient hierbei zur Aufnahme einer Speicherleuchtstoffplatte, in der ein mit der Röntgenstrahlung erzeugtes Bild latent gespeichert werden kann. Die Speicherleuchtstoffplatte wird während des Transportes in der Kassette gehalten und üblicherweise nur zum Auslesen des abgespeicherten Bildes aus der Kassette entnommen.

Aus der EP 1 324 117 A1 ist eine Kassette bekannt, die zur Aufnahme einer derartigen Speicherleuchtstoffplatte dient und mit einer Öffnung versehen ist, durch welche die Speicherleuchtstoffplatte in die Kassette einzuführen oder aus dieser zu entnehmen ist. Um die in der Kassette aufgenommene Speicherleuchtstoffplatte vor einem ungewollten Belichten oder auch vor Verschmutzungen und Beschädigungen zu schützen, ist die bekannte Kassette an ihrer Öffnung mit einem Verschluss versehen, der zwischen einer Schließstellung, in der er die Öffnung verschließt, und einer Freigabestellung, in der er die Öffnung zum Einführen oder Entnehmen der Speicherleuchtstoffplatte freigibt, verstellbar ist. Als Verschluss dient hierbei eine sich über die Länge der Öffnung erstreckende Leiste, welche an jedem ihrer Enden mit einer Lagerplatte versehen ist, welche ihrerseits in der Kassette drehbar gelagert sind. Zum Betätigen des Verschlusses ist ein Betätigungsmechanismus in der Kassette gehalten, welcher von außen durch ein Betätigungselement innerhalb der Kassette verschoben werden kann.

Nachteilig an dieser bekannten Kassette ist, dass die Öffnung durch die Art der Lagerung des Verschlusses vergleichsweise gering bemessen ist, wodurch das Einführen der Speicherleuchtstoffplatte in die Kassette sowie das Entnehmen der Speicherleuchtstoffplatte aus der Kassette erschwert ist.

Die US 5,441,251 offenbart eine Kassette zur Aufnahme einer Speicherleuchtstoffplatte. Bei dieser Kassette ist der Boden der Kassette in zwei Abschnitte unterteilt, wobei einer der Abschnitte schwenkbar an dem anderen Abschnitt befestigt ist und zum Öffnen der Kassette aufgeschwenkt werden kann, damit die Speicherleuchtstoffplatte in die Kassette eingeführt oder aus dieser entnommen werden kann.

Ein wesentlicher Nachteil dieser bekannten Kassette besteht darin, dass der zu öffnende Bodenabschnitt einen großen Schwenkbereich erfordert, um die Speicherleuchtstoffplatte aus der Kassette entnehmen oder in diese einführen zu können. Da eine Kassette üblicherweise nur innerhalb eines Gerätes, beispielsweise eines Lesegerätes, geöffnet wird, ist in dem Gerät ein entsprechend großer Schwenkbereich erforderlich, damit die Kassette geöffnet werden kann.

Aus dem Patent US 3,916,206 ist eine Röntgenfilmkassette bekannt, bei welcher an einer Schmalseite der Kassette eine schwenkbare Klappe vorgesehen ist. Der in diesem Dokument offenbarte Mechanismus, durch welchen der in der Kassette befindliche Röntgenfilm in einer definierten Lage gehalten wird, ist relativ aufwändig.

Es ist Aufgabe der Erfindung, eine Kassette der eingangs genannten Art so weiterzubilden, dass die Öffnung zum Einführen und Entnehmen der Speicherleuchtstoffplatte möglichst groß und der Platzbedarf für den Verschluss der Kassette möglichst gering ist, wobei gleichzeitig gewährleistet werden soll, dass die in der Kassette befindliche Speicherleuchtstoffplatte in einer definierten Lage gehalten wird.

Die Erfindung löst die Aufgabe durch eine Kassette mit den Merkmalen nach Anspruch 1.

Bei der erfindungsgemäßen Kassette dient als Verschluss eine Klappe, welche eine an einer Schmalseite der Kassette ausgebildete Öffnung verschließen bzw. freigeben kann, wobei die Klappe an dem Übergang zwischen der mit der Öffnung versehenen Schmalseite der Kassette und dem Boden der Kassette oder dem Kassettendeckel schwenkbar gelagert ist. Durch das schwenkbare Lagern der Klappe im Bereich des Übergangs zwischen der Schmalseite der Kassette und dem Boden bzw. Deckel der Kassette wird der Vorteil erzielt, dass ein deutlich kleinerer Schwenkbereich für die Klappe freigehalten werden muss als bei den aus dem Stand der Technik bekannten Kassetten. Gleichzeitig kann sich die Klappe über die gesamte Höhe der Schmalseite der Kassette erstrecken, so dass eine maximale Öffnungsgröße für die Öffnung der Kassette realisiert werden kann. Hierdurch wird insbesondere das Entnehmen der Speicherleuchtstoffplatte aus der Kassette bzw. das Einführen der Speicherleuchtstoffplatte in die Kassette erleichtert. Wird die Klappe weiter als 90° aufgeschwenkt, besteht darüber hinaus der Vorteil, dass die geöffnete Klappe eine zusätzliche mechanische Stabilisierung des Bodens der Kassette bzw. des Kassettendeckels bewirkt.

Um die Speicherleuchtstoffplatte bei geschlossener Klappe in einer definierten Lage in der Kassette zu halten, ist an der in die Kassette zeigenden Innenseite der Klappe mindestens ein Verriegelungselement vorgesehen, welches bei geschlossener Klappe zum Fixieren der Speicherleuchtstoffplatte mit einer an dieser vorgesehenen Halteöffnung im Eingriff steht.

Weitere Vorteile und Ausführungsbeispiele der Erfindung werden aus der nachfolgenden Beschreibung, der Zeichnung sowie den Unteransprüchen ersichtlich.

So wird bei einer besonders bevorzugten Ausführungsform der erfindungsgemä-ßen Kassette vorgeschlagen, dass die Klappe einen - in Richtung quer zur Schwenkachse der Klappe betrachtet - L-förmigen Querschnitt aufweist. Durch den L-förmigen Querschnitt wird sowohl bei geschlossener als auch bei geöffneter Klappe eine mechanische Stabilisierung der Kassette erreicht, welche ein Zusammendrücken oder Auseinanderklaffen der Kassette verhindert.

Vorzugsweise ist die L-förmige Klappe mit ihrem einen Schenkel am Boden der Kassette schwenkbar gelagert, während der andere Schenkel in der Schließstellung der Klappe unter den Kassettendeckel in das Innere der Kassette eingeführt ist. Durch diese Maßnahme wird eine besonders gute Lichtabdichtung im Bereich der Öffnung bei geschlossener Klappe erreicht. Des Weiteren wird der Kassettendeckel bei geschlossener Klappe von dem in die Kassette ragenden Schenkel zusätzlich abgestützt, wodurch ein Zusammendrücken der Kassette im Öffnungsbereich verhindert ist.

Bevorzugt ist die Klappe durch ein Scharnier am Boden der Kassette, besonders bevorzugt an dem Boden, welcher den Röntgenstrahlen beim Röntgen zugewandt ist, der so genannten Tube-Side, schwenkbar gelagert.

Zum schwenkbaren Lagern der Klappe an der Kassette wird die Verwendung eines Folienscharniers vorgeschlagen, da ein Folienscharnier einerseits einfach und mit geringem Aufwand herzustellen ist, gleichzeitig robust ist und im Bereich des Scharniers eine hohe Lichtabdichtung sicherstellt.

Um ein unbeabsichtigtes Öffnen der Kassette, beispielsweise beim Transport, zu verhindern, ist bei einer besonders bevorzugten Ausführungsform an der Kassette eine von außen zu betätigende Verriegelungseinrichtung vorgesehen, welche die Klappe in ihrer Schließstellung verriegelt und bei Betätigung von außen die Klappe zum Öffnen freigibt.

Bei einer besonders bevorzugten Weiterbildung dieser Ausführungsform mit Verriegelungseinrichtung dient die Verriegelungseinrichtung gleichzeitig zum Fixieren der Speicherleuchtstoffplatte in der Kassette, so dass die Speicherleuchtstoffplatte, beispielsweise bei ihrer Entnahme aus der Kassette, in einer definierten Position in der Kassette gehalten ist. Hierdurch wird beispielsweise eine automatisierte Entnahme mit einer Handhabungs-Einrichtung erleichtert.

Besonders von Vorteil ist bei dieser Weiterbildung, wenn die Verriegelungseinrichtung zwischen einer Verriegelungsstellung, in der sie die Klappe in ihrer Schließstellung verriegelt, einer Zwischenstellung, in der sie die Klappe zum Öffnen freigegeben hat und mit mindestens einem an der Speicherleuchtstoffplatte vorgesehenen Halteelement zum Fixieren derselben in Eingriff steht, und einer Entriegelungsstellung bewegbar ist, in der sie die Speicherleuchtstoffplatte endgültig freigibt. Durch diesen vorgegebenen Ablauf wird erreicht, dass die Speicherleuchtstoffplatte beim Öffnen der Klappe definiert in der Kassette gehalten ist, so dass die zuvor angesprochene Handhabungs-Einrichtung mit der in einer definierten Lage gehaltenen Speicherleuchtstoffplatte in Eingriff kommen kann. Sobald die Handhabungs-Einrichtung die Speicherleuchtstoffplatte erfasst hat, kann die Verriegelungseinrichtung in ihre Entriegelungsstellung bewegt werden, in der sie die Speicherleuchtstoffplatte freigibt. Zum Betätigen der Verriegelungseinrichtung wird beispielsweise ein von dem Gerät, in das die Kassette eingeführt wird, zu betätigendes Betätigungsorgan, wie ein beweglicher Zapfen, verwendet.

Der beschriebene Mechanismus der Ver- und Entriegelung der Klappe bzw. Speicherleuchtstoffplatte kann besonders einfach realisiert werden, wenn lediglich zwei mögliche Stellungen der Verriegelungseinrichtung vorgesehen sind. Bei dieser Ausgestaltung entspricht die erste Stellung der oben beschriebenen Verriegelungsstellung, in der die geschlossene Klappe verriegelt ist. Die zweite Stellung entspricht der oben beschriebenen Zwischenstellung, in welcher die Klappe zum Öffnen freigegeben ist, während die Speicherleuchtstoffplatte noch fixiert ist. Wird nun die Verriegelungseinrichtung bei geöffneter Klappe wieder in ihre erste Stellung zurück bewegt, so gibt sie die Speicherleuchtstoffplatte schließlich frei. Die erste Stellung entspricht in dieser Ausführung also auch der oben beschriebenen Entriegelungsstellung. Die Ver- und Entriegelung von Klappe bzw. Speicherleuchtstoffplatte wird bei dieser Ausgestaltung somit durch einfaches Drücken und anschließendes Loslassen der Verriegelungseinrichtung erreicht.

Besonders bevorzugt dient als Verriegelungseinrichtung ein parallel zur Längsrichtung der Öffnung verschiebbar gelagerter Verriegelungsschieber, der mindestens eine erste Verriegelungsöffnung zum Erfassen eines an der in die Kassette zeigenden Innenseite der Klappe vorgesehenen Verriegelungselementes sowie mindestens eine zweite Verriegelungsöffnung zum Erfassen eines von der Speicherleuchtstoffplatte abstehenden Halteelementes aufweist. Auf diese Weise kann mit einem einzigen Verriegelungsschieber sowohl das Ver- und Entriegeln der Klappe als auch gleichzeitig das Fixieren der Speicherleuchtstoffplatte durchgeführt werden. Zum Ausführen der zuvor beschriebenen Stellungen der Verriegelungseinrichtung, nämlich die Verriegelungsstellung, die Zwischenstellung und die Entriegelungsstellung, muss der Verriegelungsschieber lediglich in unterschiedliche Längspositionen verschoben werden.

Als Halteelement für die Speicherleuchtstoffplatte dient vorzugsweise ein von der Oberseite der Speicherleuchtstoffplatte abstehender Haltezapfen. Die Verwendung eines derartigen Haltezapfens ist von Vorteil, weil der Verriegelungsschieber den Haltezapfen mit seiner zweiten Verriegelungsöffnung relativ einfach erfassen kann, wobei gleichzeitig eine definierte Lage der Speicherleuchtstoffplatte in der Kassette sichergestellt ist.

Der Verriegelungsschieber ist vorzugsweise durch ein elastisches Element in seine Verriegelungsstellung vorgespannt, so dass bei einem Nichtbetätigen des Verriegelungsschiebers die Klappe auf alle Fälle verriegelt ist.

Wird zum Verriegeln der Klappe der zuvor beschriebene Verriegelungsschieber eingesetzt, ist es ferner von Vorteil, wenn das zuvor beschriebene Verriegelungselement der Klappe gleichzeitig zum Ineingriffkommen mit der ersten Verriegelungsöffnung des Verriegelungsschiebers dient.

Bei einer besonders bevorzugten Ausführungsform der erfindungsgemäßen Kassette ist die Klappe aus einem Kunststoff, beispielsweise ABS, PA oder PP gefertigt, so dass die Klappe begrenzt flexibel ist und beispielsweise ein Durchbiegen der Kassette unter Belastungen, wie bei einer Anwendung, bei der ein Patient auf einem unebenen oder nachgiebigen Untergrund ruht und die Kassette zum Röntgen unter den Patienten geschoben wird, erlaubt. Gleichzeitig kann das flexible Kunststoffmaterial Kräfte, die durch einen Fall oder einen Stoß in die Kassette eingeleitet werden, besser abdämpfen. Darüber hinaus wird durch den Einsatz des flexiblen Materials erreicht, dass die Klappe, wenn sie mit entsprechender Vorspannkraft in ihrer Schließstellung gehalten ist, gleichmäßig an dem Öffnungsrand anliegt, wodurch eine besonders hohe Lichtdichtigkeit der Kassette gewährleistet ist.

Wird eine aus Kunststoff geformte Klappe eingesetzt, wird ferner vorgeschlagen, das Verriegelungselement durch eine nach innen in Richtung der Innenseite der Klappe ausgeformte Erhebung auszubilden, wobei die dadurch an der Außenseite der Klappe ausgebildete Vertiefung gleichzeitig zum Öffnen der Klappe einsetzbar ist. In diesem Ausführungsbeispiel dient das Verriegelungselement also nicht nur als Gegenstück zur Verriegelungsvorrichtung. Vielmehr dient das Verriegelungselement gleichzeitig auch als Öffnungshilfe, beispielsweise für ein Betätigungsorgan eines Lesegerätes, das in die an der Außenseite der Klappe ausgebildete Vertiefung eingreift und die Klappe auf diese Weise öffnen kann.

Die an der Speicherleuchtstoffplatte vorgesehene Halteöffnung kann gleichzeitig auch als Kupplungselement für einen Greifer dienen, mit welchem die Speicherleuchtstoffplatte in die Kassette einführbar oder aus dieser entnehmbar ist.

Bei einer besonders bevorzugten Ausführungsform der erfindungsgemäßen Kassette ist die Kassette in Form eines Rahmens ausgebildet, an welchem der Kassettendeckel befestigt ist. Der Boden ist bei dieser Ausführungsform der Kassette gemeinsam mit der Klappe in den Rahmen eingeschoben und lösbar mit diesem verbunden. Durch diesen Aufbau ist ein sehr schnelles Demontieren der Kassette, beispielsweise zu Reinigungs- oder Wartungszwecken, problemlos und auf einfache Weise möglich.

Die Erfindung sowie weitere ihrer Vorteile werden nachfolgend anhand eines Ausführungsbeispiels unter Bezugnahme auf die Zeichnungen näher erläutert.

Es zeigen:
- Fig. 1: eine perspektivische Darstellung einer erfindungsgemäßen Kassette zur Aufnahme einer Speicherleuchtstoffplatte;
- Fig. 2: eine perspektivische Darstellung eines Abschnittes der mit der erfindungsgemäßen Kassette zu verwendenden Speicherleuchtstoffplatte;
- Fig. 3: eine perspektivische Darstellung eines Abschnittes der erfindungsgemäßen Kassette mit geöffneter Klappe;
- Fig. 4: eine schematische Darstellung eines Abschnittes der erfindungsgemäßen Kassette mit eingelegter Speicherleuchtstoffplatte, wobei aus Übersichtlichkeitsgründen eine in der Kassette vorgesehene Verriegelungseinrichtung nicht dargestellt ist; und
- Fig. 5a bis 5e: schematische Darstellungen der erfindungsgemäßen Kassette mit eingelegter Speicherleuchtstoffplatte sowie einer Verriegelungseinrichtung, welche in unterschiedlichen Betriebsstellungen dargestellt ist.

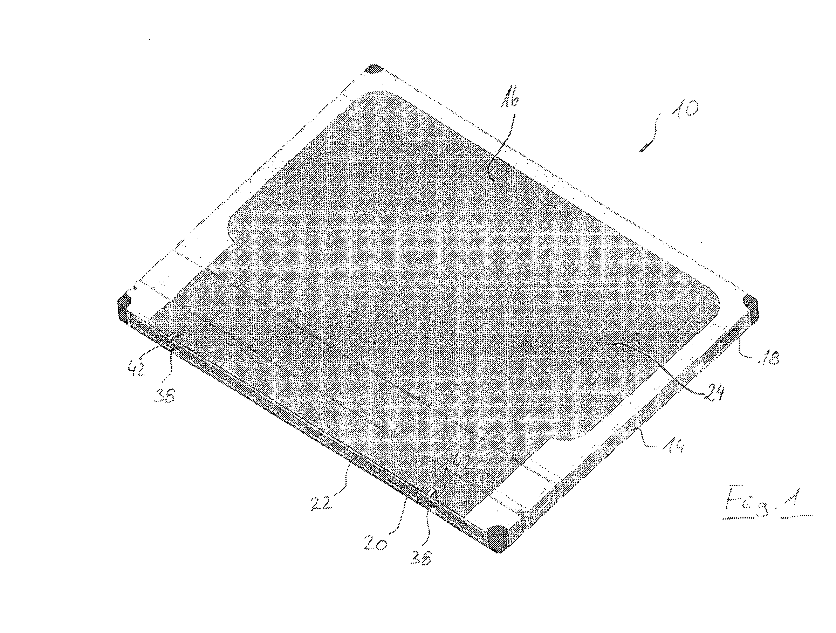

Fig. 1 zeigt in perspektivischer Darstellung eine erfindungsgemäße Kassette 10 zur Aufnahme einer Speicherleuchtstoffplatte. Die Kassette 10 ist in Form eines offenen Rahmens 14 ausgebildet, an welchem der Kassettendeckel 16 befestigt ist. Der Boden der Kassette 10 ist in den Rahmen 14 eingeschoben und an diesem verriegelt. Zum Entriegeln ist an jeder der beiden Seitenflächen der Kassette 10 ein Entriegelungsschieber 18 vorgesehen, welcher bei Betätigung den Boden freigibt, so dass dieser aus dem Rahmen 14 gezogen werden kann.

An der in Fig. 1 vorne dargestellten Schmalseite der Kassette 10 ist eine Öffnung 20 vorgesehen, durch die die Speicherleuchtstoffplatte in die Kassette 10 eingeführt oder aus dieser entnommen werden kann. Die Öffnung 20 ist durch eine Klappe 22 verschließbar. Die Klappe 22 ist aus einem Kunststoffmaterial gefertigt und an der Vorderkante des Bodens, welche die Öffnung 20 an der Unterseite begrenzt, durch ein nicht dargestelltes Folienscharnier schwenkbar angelenkt.

Die Klappe 22 hat einen in Richtung quer zur Schwenkachse der Klappe 22 betrachtet L-förmigen Querschnitt, wobei der eine Schenkel des L-förmigen Querschnitts durch das Folienscharnier am Boden schwenkbar gelagert ist. Der andere Schenkel der Klappe 22 steht rechtwinklig von dem ersten Schenkel ab und ist bei in die Schließstellung bewegter Klappe 22 unter den Kassettendeckel 16 eingeführt, wie in Fig. 1 gezeigt ist.

An der Oberseite des Kassettendeckels 16 ist ferner eine Klemmvorrichtung 24 vorgesehen, an der beispielsweise Informationsmaterial, wie Zettel oder Ähnliches an die Kassette 10 geklemmt werden können.

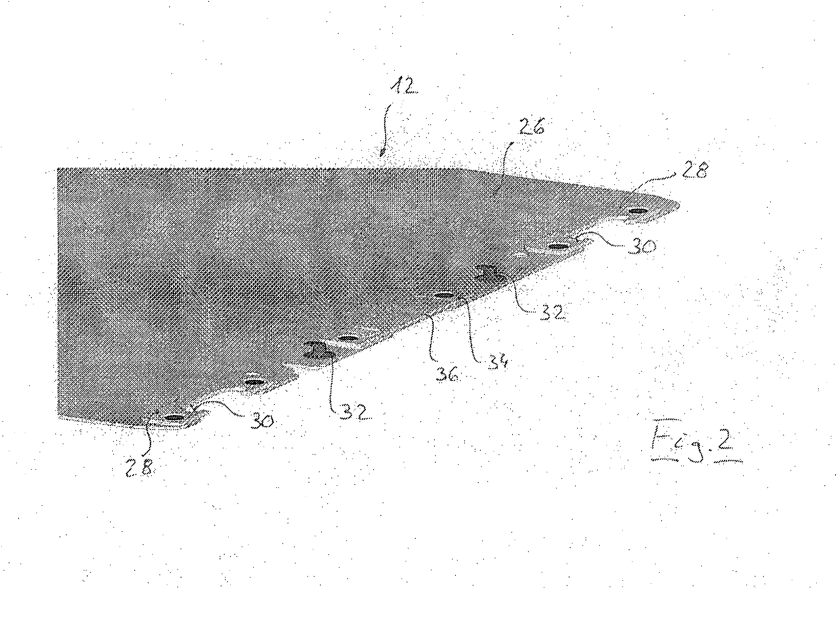

Fig. 2 zeigt in perspektivischer Darstellung einen Abschnitt der Speicherleuchtstoffplatte 12, an deren vorderer Kante verschiedene Funktionselemente vorgesehen sind, welche nachfolgend erläutert werden. Die Speicherleuchtstoffplatte 12 ist aus einem Substrat 26 gebildet, auf dessen Oberseite in bekannter Weise eine zum latenten Speichern eines Bildes dienende Phosphorschicht (nicht dargestellt) aufgebracht ist. An der Vorderkante des Substrates 26 ist unmittelbar benachbart zu jeder Seitenkante jeweils ein Ankerblech 28 befestigt. Das Ankerblech 28 hat eine längliche, sich in Längsrichtung der Vorderkante erstreckende Halteöffnung 30, welche an ihrer Vorderseite offen ist.

Zwischen den beiden Ankerblechen 28 sind zwei nach oben abstehende Haltezapfen 32 befestigt, welche jeweils etwa gleich zu dem unmittelbar benachbarten Ankerblech 28 beabstandet sind. Zwischen den beiden Haltezapfen 32 ist ein Chipkartenhalter 34 vorgesehen, an welchem eine Chipkarte 36 zum Abspeichern von Informationen, beispielsweise Informationen über einen Patienten, gehalten wird.

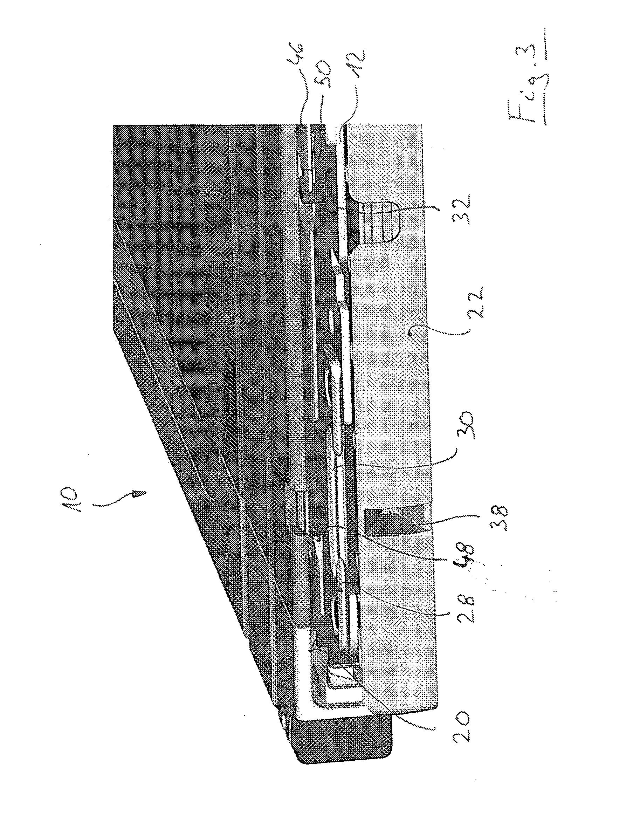

In Fig. 3 ist in perspektivischer Darstellung ein Abschnitt der Schmalseite der Kassette 10 dargestellt, an der die Öffnung 20 ausgebildet ist, wobei die am Boden schwenkbar angelenkte Klappe 22 geöffnet ist. Wie der Darstellung ferner zu entnehmen ist, ist in die Kassette 10 die Speicherleuchtstoffplatte 12 eingeführt, wobei eines der Ankerbleche 28 und einer der Haltezapfen 32 dargestellt ist.

Wie Fig. 3 ferner zu entnehmen ist, ist an der Klappe 22 eine pyramidenförmige Erhebung 38 vorgesehen, welche von der Innenseite der Klappe 22 nach innen in die Kassette 10 ragt. Ist die Klappe 22 geschlossen, ist die Erhebung 38 mit ihrem in Fig. 3 oben dargestellten Abschnitt in einer an der oberen Kante 40 der Öffnung vorgesehenen Ausnehmung 42 (siehe Fig. 1) eingeführt.

Wie Fig. 3 weiter zeigt, ist in der Kassette 10 eine Verriegelungseinrichtung vorgesehen. Diese Verriegelungseinrichtung ist aus einem Verriegelungsschieber 46 gebildet, welcher parallel zur Öffnung 22 längsverschieblich in der Kassette 10 gelagert ist.

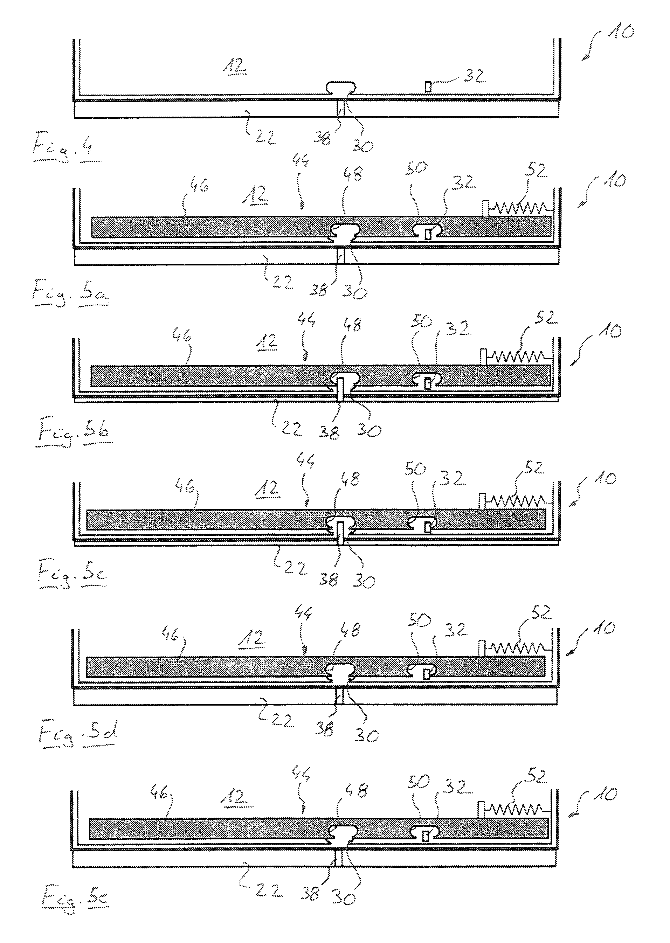

Der Aufbau und die Funktionsweise dieses Verriegelungsschiebers 46 der Verriegelungseinrichtung wird nachfolgend anhand der Figuren 4 und 5a bis 5e näher erläutert.

Fig. 4 zeigt eine schematische Darstellung eines Abschnitts der erfindungsgemäßen Kassette 10, wobei aus Gründen einer besseren Übersichtlichkeit der Kassettendeckel 16 und der Verriegelungsschieber 46 (siehe Fig. 1 bzw. Fig. 3) weggelassen wurde. In die Kassette 10 ist eine Speicherleuchtstoffplatte 12 eingelegt, welche in dieser vereinfachten Darstellung lediglich mit einem einzigen Ankerblech 28 mit Halteöffnung 30 und einem einzigen Haltezapfen 32 versehen ist. Selbstverständlich kann die Speicherleuchtstoffplatte 12, wie in Fig. 2 gezeigt, auch mit zwei oder mehreren Ankerplatten 28 und Haltezapfen 32 ausgestattet sein. An der in Fig. 4 unten dargestellten Schmalseite der Kassette 10 ist die Klappe 22 dargestellt, welche gerade geöffnet ist. Die an der Klappe 22 vorgesehene Erhebung 38 ist so an der Klappe 22 angeordnet ausgebildet, dass die Speicherleuchtstoffplatte 12, wenn sie in die Kassette 10 eingelegt ist, mit der Halteöffnung 30 ihres Ankerbleches 28 zu der Erhebung 38 ausgerichtet ist.

In den Fig. 5a bis 5e ist die Kassette 10 analog zu Fig. 4 schematisch dargestellt, wobei zur Veranschaulichung des Verriegelungsmechanismus zusätzlich der Verriegelungsschieber 46 eingezeichnet ist.

Wie Fig. 5a zeigt, hat der Verriegelungsschieber 46 zwei Verriegelungsöffnungen 48 und 50. Die erste Verriegelungsöffnung 48 ist etwa auf Höhe der Erhebung 38 der Klappe 22 angeordnet und dient zum Ineingriffkommen mit der Erhebung 38, wie später noch detailliert erläutert wird. Benachbart zur ersten Verriegelungsöffnung 48 ist eine zweite Verriegelungsöffnung 50 vorgesehen, welche zum Ineingriffkommen mit dem Haltezapfen 32 dient.

Der Verriegelungsschieber 46 ist durch eine Zugfeder 52 in eine Verriegelungsstellung vorgespannt, wie sie in Fig. 5b gezeigt ist. In dieser Verriegelungsstellung steht die erste Verriegelungsöffnung 48 mit der Erhebung 38 der in ihre Schließstellung bewegten Klappe 22 in Eingriff, wodurch die Klappe 22 verriegelt ist. Gleichzeitig ist die zweite Verriegelungsöffnung 50 so relativ zu dem Haltezapfen 32 der Speicherleuchtstoffplatte 12 angeordnet, dass sie nicht mit dem Haltezapfen 32 in Eingriff steht. In dieser in Fig. 5b gezeigten Verriegelungsstellung ragt jedoch die Erhebung 38 in die Halteöffnung 30 des Ankerbleches 28 der Speicherleuchtstoffplatte 12, wodurch diese zumindest in beschränktem Umfang in der Kassette 10 in einer definierten Position gehalten ist. Gleichzeitig wird die Erhebung 38 durch die Ausnehmung 42 am Kassettendeckel 16 (vgl. Fig. 1) zusätzlich gestützt.

Der Verriegelungsschieber 46 kann nun, wie in Fig. 5c ersichtlich, von außen gegen die Kraft der Zugfeder 52 in eine Zwischenstellung bewegt werden, in welcher die erste Verriegelungsöffnung 48 die Erhebung 38 freigibt, während gleichzeitig die zweite Verriegelungsöffnung 50 mit dem Haltezapfen 32 der Speicherleuchtstoffplatte 12 in Eingriff kommt. In dieser Position ist die Speicherleuchtstoffplatte 12 in einer definierten Lage in der Kassette 10 gehalten, während die Klappe 22 gleichzeitig zum Öffnen freigegeben ist.

Das Öffnen kann nun entweder von Hand oder auch automatisiert durch ein entsprechendes Betätigungsorgan erfolgen. Bei Verwendung eines derartigen Betätigungsorgans ist es von Vorteil, wenn das Betätigungsorgan von außen in die Erhebung 38 eingreift und die Klappe 22 nach unten wegschwenkt. Dieser Betriebszustand ist in Fig. 5d gezeigt.

In einem letzten Schritt, der in Fig. 5e gezeigt ist, wird der Verriegelungsschieber 46 wieder freigegeben, so dass die Zugfeder 52 den Verriegelungsschieber 46 wieder in seine Ausgangsstellung zurückzieht. In dieser Ausgangsstellung kann die Speicherleuchtstoffplatte 12 der Kassette 10 entnommen werden.

Nach dem Einführen der Speicherleuchtstoffplatte 12 wird die Kassette 10 wieder in umgekehrter Reihenfolge geschlossen. Zu diesem Zweck wird zunächst der Verriegelungsschieber 46 nach dem Einführen der Speicherleuchtstoffplatte 12 wieder in seine Zwischenstellung bewegt, in der seine zweite Verriegelungsöffnung mit dem Haltezapfen 32 in Eingriff kommt, während die erste Verriegelungsöffnung 48 und die Halteöffnung 30 der Ankerplatte 28 zueinander ausgerichtet sind. Anschließend wird die Klappe 22 geschlossen, wobei die Erhebung 38 in die erste Verriegelungsöffnung 48 und die Halteöffnung 30 eingeführt wird, wie in Fig. 5c gezeigt ist. Danach wird der Verriegelungsschieber 46 ausgelassen, so dass die Zugfeder 52 den Verriegelungsschieber 46 wieder in seine Ausgangsstellung zurückbewegt, in der er mit seiner ersten Verriegelungsöffnung 48 mit der Erhebung 38 der Klappe 22 in Eingriff kommt und diese verriegelt, während gleichzeitig die zweite Verriegelungsöffnung 50 den Haltezapfen 32 wieder freigibt.

Alternativ oder zusätzlich können die Erhebung 38 und/oder die erste Verriegelungsöffnung 48 derart geformt sein, dass der Verriegelungsschieber 46 beim Schließen der Klappe 22 zunächst in seiner Ausgangsposition verbleiben kann und alleine durch die Kraft, mit der die Erhebung 38 beim Schließen der Klappe 22 auf die erste Verriegelungsöffnung 48 drückt, kurzzeitig in seine Zwischenstellung bewegt wird. In dieser Zwischenstellung schnappt die erste Verriegelungsöffnung 48 in die Erhebung 38 ein, wobei der Verriegelungsschieber 46 wieder in seine Ausgangsposition zurückbewegt wird.

Bei der Entnahme der Speicherleuchtstoffplatte 12 besteht auch die Möglichkeit, den Verriegelungsschieber 46 noch so lange mit dem Haltezapfen 32 in Eingriff zu halten (vgl. Fig. 5d), bis eine entsprechende Handhabungs-Einrichtung mit der Halteöffnung 30 in Eingriff kommt. Die Halteöffnung 30 dient dann als Kupplungselement für die Handhabungs-Einrichtung.

Anschließend kann der Verriegelungsschieber 46 in seine Ausgangsstellung zurückbewegt werden (vgl. Fig. 5e), so dass die Speicherleuchtstoffplatte 12 freigegeben ist und die Handhabungs-Einrichtung die Speicherleuchtstoffplatte 12 der Kassette 10 entnehmen kann.

### Bezugszeichenliste:

- 10: Kassette
- 12: Speicherleuchtstoffplatte
- 14: Rahmen
- 16: Kassettendeckel
- 18: Entriegelungsschieber
- 20: Öffnung
- 22: Klappe
- 24: Klemmvorrichtung
- 26: Substrat
- 28: Ankerblech
- 30: Halteöffnung
- 32: Haltezapfen
- 34: Chipkartenhalter
- 36: Chipkarte
- 38: Erhebung
- 40: obere Kante
- 42: Ausnehmung
- 44: Verriegelungseinrichtung
- 46: Verriegelungsschieber
- 48: erste Verriegelungsöffnung
- 50: zweite Verriegelungsöffnung
- 52: Zugfeder

## Patentansprüche

1. Kassette, insbesondere Röntgenkassette, zur Aufnahme einer Speicherleuchtstoffplatte (12), mit
- einer an einer der Schmalseiten der Kassette (10) ausgebildeten Öffnung (20), durch welche die Speicherleuchtstoffplatte (12) in die Kassette (10) einzuführen oder aus dieser zu entnehmen ist, und
- einem Verschluss (22), der zwischen einer Schließstellung, in der er die Öffnung (20) verschließt, und einer Freigabestellung, in der er die Öffnung (20) zum Einführen oder Entnehmen der Speicherleuchtstoffplatte (12) freigibt, verstellbar ist,
wobei als Verschluss eine Klappe (22) dient, welche an dem Übergang zwischen der mit der Öffnung (20) versehenen Schmalseite der Kassette (10) und dem Boden der Kassette (10) oder dem Kassettendeckel (16) schwenkbar gelagert ist,
**dadurch gekennzeichnet, dass** an der in die Kassette (10) zeigenden Innenseite der Klappe (10) mindestens ein Verriegelungselement (38) vorgesehen ist, welches bei geschlossener Klappe (22) zum Fixieren der Speicherleuchtstoffplatte (12) mit einer an dieser vorgesehenen Halteöffnung (30) in Eingriff steht.

2. Kassette nach Anspruch 1, **dadurch gekennzeichnet, dass** die Klappe (22) einen, in Richtung quer zur Schwenkachse der Klappe (22) betrachtet, L-förmigen Querschnitt aufweist.

3. Kassette nach Anspruch 2, **dadurch gekennzeichnet, dass** die L-förmige Klappe (22) mit ihrem einen Schenkel am Boden der Kassette (10) schwenkbar gelagert ist, während der andere Schenkel in der Schließstellung der Klappe (22) unter den Kassettendeckel (16) in das Innere der Kassette (10) eingeführt ist.

4. Kassette nach mindestens einem der Ansprüche 1, 2 oder 3, **dadurch gekennzeichnet, dass** die Klappe (22) durch ein Scharnier am Boden der Kassette (10), vorzugsweise an dem Boden, welcher den Röntgenstrahlen beim Röntgen zugewandt ist, schwenkbar gelagert ist.

5. Kassette nach mindestens einem der Ansprüche 1 bis 4, **dadurch gekennzeichnet, dass** die Klappe (22) durch ein Folienscharnier an der Kassette (10) schwenkbar gelagert ist.

6. Kassette nach mindestens einem der Ansprüche 1 bis 5, **dadurch gekennzeichnet, dass** eine von außen zu betätigende Verriegelungseinrichtung (44) an der Kassette (10) vorgesehen ist, welche die Klappe (22) in ihrer Schließstellung verriegelt und welche bei Betätigung von außen die Klappe (22) zum Öffnen freigibt.

7. Kassette nach Anspruch 6, **dadurch gekennzeichnet, dass** die Verriegelungseinrichtung (44) gleichzeitig zum Fixieren der Speicherleuchtstoffplatte (12) in der Kassette (10), vorzugsweise bei in die Freigabestellung bewegter Klappe (22), dient.

8. Kassette nach Anspruch 7, **dadurch gekennzeichnet, dass** die Verriegelungseinrichtung (44) zwischen einer Verriegelungsstellung, in der sie die Klappe (22) in ihrer Schließstellung verriegelt, einer Zwischenstellung, in der sie die Klappe (22) zum Öffnen freigegeben hat und mit mindestens einem an der Speicherleuchtstoffplatte (12) vorgesehenen Halteelement (32) zum Fixieren derselben in Eingriff steht, und einer Entriegelungsstellung bewegbar ist, in der sie die Speicherleuchtstoffplatte (12) freigibt.

9. Kassette nach mindestens einem der Ansprüche 6, 7 oder 8, **dadurch gekennzeichnet, dass** als Verriegelungseinrichtung (44) ein parallel zur Längsrichtung der Öffnung (20) verschiebbar gelagerter Verriegelungsschieber (46) dient, der mindestens eine erste Verriegelungsöffnung (48) zum Erfassen eines an der in die Kassette (10) zeigenden Innenseite der Klappe (22) vorgesehenen Verriegelungselementes (38) sowie mindestens eine zweite Verriegelungsöffnung (50) zum Erfassen eines von der Speicherleuchtstoffplatte (12) abstehenden Halteelementes (32) aufweist.

10. Kassette nach Anspruch 9, **dadurch gekennzeichnet, dass** der Verriegelungsschieber (46) durch ein elastisches Element (52) in seine Verriegelungsstellung vorgespannt ist.

11. Kassette nach Anspruch 9, **dadurch gekennzeichnet, dass** das Verriegelungselement (38) gleichzeitig zum Ineingriffkommen mit der ersten Verriegelungsöffnung (48) des Verriegelungsschiebers (46) dient.

12. Kassette nach einem der vorhergehenden Ansprüche, **dadurch gekennzeichnet, dass** die Klappe (22) aus einem Kunststoff geformt ist und dass das Verriegelungselement durch eine nach innen in Richtung der Innenseite der Klappe (22) ausgeformte Erhebung (38) gebildet ist, wodurch an der Außenseite der Klappe (22) eine Vertiefung gebildet wird.

13. Kassette nach mindestens einem der vorhergehenden Ansprüche, **dadurch gekennzeichnet, dass** die Halteöffnung (30) an der Speicherleuchtstoffplatte (12) gleichzeitig als Kupplungselement dient, an welchem die Speicherleuchtstoffplatte (12) in die Kassette (10) einführbar oder aus dieser entnehmbar ist.

14. Kassette nach mindestens einem der vorhergehenden Ansprüche, **dadurch gekennzeichnet, dass** die Kassette (10) in Form eines Rahmens (14) ausgebildet ist, an welchem der Kassettendeckel (16) befestigt ist, und dass der Boden der Kassette (10) gemeinsam mit der Klappe (22) in den Rahmen (14) eingeschoben und lösbar mit diesem verbunden ist.

## Claims

1. A cassette, in particular an X-ray cassette, for receiving a storage phosphor plate (12), comprising
- an opening (20) formed in one of the narrow sides of the cassette (10), through which the storage phosphor plate (12) can be inserted in the cassette (10) or removed from the same, and
- a closure (22) which is displaceable between a closed position in which it closes the opening (20) and a release position in which it releases the opening (20) for insertion or removal of the storage phosphor plate (12),
wherein a flap (22) serves as the closure, the flap being mounted swivellably to the transition between the narrow side of the cassette (10) provided with the opening (20) and the base of the cassette (10) or the cassette lid (16),
**characterised in that** there is provided on the inner face of the flap (10) oriented towards the interior of the cassette (10) at least one locking element (38) which is in engagement with a retaining aperture (30) provided on the storage phosphor plate (12) to fix the latter when the flap (22) is closed.

2. Cassette according to claim 1, wherein the flap (22) exhibits an L-shaped cross-section, viewed in a direction transverse to the swivel axis of the flap (22).

3. Cassette according to claim 2, wherein one flange of the L-shaped flap (22) is mounted swivellably to the base of the cassette (10), while the other flange is inserted below the cassette lid (16) into the interior of the cassette (10) in the closed position of the flap (22).

4. Cassette according to any of claims 1, 2 or 3, wherein the flap (22) is mounted swivellably by means of a hinge to the base of the cassette (10), preferably to the base which faces towards the X-rays while an X-ray image is being taken.

5. Cassette according to any of claims 1 to 4, wherein the flap (22) is mounted swivellably to the cassette (10) by means of a film hinge.

6. Cassette according to any of claims 1 to 5, wherein a locking device (44) to be actuated from outside is provided on the cassette (10), said locking device (44) locking the flap (22) in its closed position and releasing the flap (22) for opening when actuated from outside.

7. Cassette according to claim 6, wherein the locking device (44) serves at the same time to fix the storage phosphor plate (12) in the cassette (10), preferably when the flap (22) has been moved to the release position.

8. Cassette according to claim 7, wherein the locking device (44) is movable between a locking position in which it locks the flap (22) in its closed position, an intermediate position in which it has released the flap (22) for opening and is in engagement with at least one retaining element (32) provided on the storage phosphor plate (12) for fixing the latter, and an unlocking position in which it releases the storage phosphor plate (12).

9. Cassette according to any of claims 6, 7 or 8, wherein a locking slider (46) mounted displaceably parallel to the longitudinal direction of the opening (20) serves as locking device (44), said locking slider (46) having at least one first locking aperture (48) for engaging with a locking element (38) provided on the inner face of the flap (22) oriented towards the interior of the cassette (10) and at least one second locking aperture (50) for engaging with a retaining element (32) projecting from the storage phosphor plate (12).

10. Cassette according to claim 9, wherein the locking slider (46) is preloaded to its locking position by an elastic element (52).

11. Cassette according to claim 9, wherein the locking element (38) serves at the same time for engaging with the first locking aperture (48) of the locking slider (46).

12. Cassette according to any of the preceding claims, wherein the flap (22) is made of a plastic material and wherein the locking element is designed as an elevation (38) impressed inwardly towards the inner face of the flap (22), as a result of which a recess is formed on the outer face of the flap (22).

13. Cassette according to at least one of the preceding claims, wherein the retaining aperture (30) on the storage phosphor plate (12) serves at the same time as coupling element at which the storage phosphor plate (12) can be inserted in the cassette (10) or removed from it.

14. Cassette according to at least one of the preceding claims, wherein the cassette (10) is designed in the form of a frame (14) to which the cassette lid (16) is fixed and wherein the base of the cassette (10) together with the flap (22) is pushed into the frame (14) and joined detachably thereto.

## Revendications

1. Cassette, en particulier cassette radiographique, pour le logement d'une plaque luminescente à mémoire (12), comprenant
- une ouverture (20) réalisée sur l'un des côtés étroits de la cassette (10), par laquelle la plaque luminescente à mémoire (12) doit être introduite dans la cassette (10) ou doit être enlevée de celle-ci, et
- une fermeture (22), qui peut être déplacée entre une position de fermeture, dans laquelle elle ferme l'ouverture (20), et une position de libération, dans laquelle elle libère l'ouverture (20) pour l'introduction ou l'enlèvement de la plaque luminescente à mémoire (12),
un clapet (22), qui est logé de façon basculante sur la transition entre le côté étroit, doté de l'ouverture (20), de la cassette (10) et le fond de la cassette (10) ou le couvercle de cassette (16), servant de fermeture,
**caractérisée en ce que** sur le côté intérieur, dirigé vers l'intérieur de la cassette (10), du clapet (10) est prévu au moins un élément de verrouillage (38) qui, lorsque le clapet (22) pour la fixation de la plaque luminescente à mémoire (12) est fermé, est en prise avec une ouverture de retenue (30) prévue sur celle-ci.

2. Cassette selon la revendication 1, **caractérisée en ce que** le clapet (22) présente une section en L, vue dans la direction transversale à l'axe de pivotement du clapet (22).

3. Cassette selon la revendication 2, **caractérisée en ce que** le clapet (22) en forme de L est logé de façon basculante avec l'une de ses branches sur le fond de la cassette (10), tandis que l'autre branche est introduite sous le couvercle de cassette (16) à l'intérieur de la cassette (10) lorsque le clapet (22) est dans la position de fermeture.

4. Cassette selon au moins l'une quelconque des revendications 1, 2 ou 3, **caractérisée en ce que** le clapet (22) est logé basculant par une charnière sur le fond de la cassette (10), de préférence sur le fond qui est tourné vers les rayons X lors de la radiographie.

5. Cassette selon au moins l'une quelconque des revendications 1 à 4, **caractérisée en ce que** le clapet (22) est logé de façon basculante par une charnière sur la cassette (10).

6. Cassette selon au moins l'une quelconque des revendications 1 à 5, **caractérisée en ce qu'**un dispositif de verrouillage (44) à actionner par l'extérieur est prévu sur la cassette (10), lequel verrouille le clapet (22) dans sa position de fermeture et qui libère le clapet (22) pour l'ouverture en cas d'actionnement par l'extérieur.

7. Cassette selon la revendication 6, **caractérisée en ce que** le dispositif de verrouillage (44) sert en même temps à la fixation de la plaque luminescente à mémoire (12) dans la cassette, de préférence lorsque le clapet (22) est déplacé dans la position de libération.

8. Cassette selon la revendication 7, **caractérisée en ce que** le dispositif de verrouillage (44) peut être déplacé entre une position de verrouillage, dans laquelle il verrouille le clapet (22) dans sa position de fermeture, une position intermédiaire, dans laquelle il a libéré le clapet (22) pour l'ouverture et est en prise avec au moins un élément de retenue (32) prévu sur la plaque luminescente à mémoire (12) pour la fixation de celle-ci, et une position de déverrouillage, dans laquelle il libère la plaque luminescente à mémoire (12).

9. Cassette selon au moins l'une quelconque des revendications 6, 7 ou 8, **caractérisée en ce qu'**un coulisseau de verrouillage (46) logé de façon coulissante parallèlement à la direction longitudinale de l'ouverture (20) sert de dispositif de verrouillage (44), lequel coulisseau présente au moins une première ouverture de verrouillage (48) pour la saisie d'un élément de verrouillage (38) prévu sur le côté intérieur, dirigé vers l'intérieur de la cassette (10), du clapet (22) et au moins une seconde ouverture de verrouillage (50) pour la saisie d'un élément de retenue (32) dépassant (12) de la plaque luminescente à mémoire (12).

10. Cassette selon la revendication 9, **caractérisée en ce que** le coulisseau de verrouillage (46) est pré-tendu par un élément (52) élastique dans sa position de verrouillage.

11. Cassette selon la revendication 9, **caractérisée en ce que** l'élément de verrouillage (38) sert en même temps à l'engagement avec la première ouverture de verrouillage (48) du coulisseau de verrouillage (46).

12. Cassette selon l'une quelconque des revendications précédentes, **caractérisée en ce que** le clapet (22) est formé à base d' un plastique et **en ce que** l'élément de verrouillage est formé par une élévation (38) formée vers l'intérieur en direction du côté intérieur du clapet (22), de sorte qu'une cavité est formée sur le côté extérieur du clapet (22).

13. Cassette selon au moins l'une quelconque des revendications précédentes, **caractérisée en ce que** l'ouverture de retenue (30) sur la plaque luminescente à mémoire (12) sert en même temps d'élément de couplage, sur lequel la plaque luminescente à mémoire (12) peut être introduite dans la cassette (10) ou être enlevée de celle-ci.

14. Cassette selon au moins l'une quelconque des revendications précédentes, **caractérisée en ce que** la cassette (10) est conçue sous la forme d'un cadre (14), sur lequel le couvercle de cassette (16) est fixé, et **en ce que** le fond de la cassette (10) est introduit conjointement avec le clapet (22) dans le châssis (14) et est relié de façon amovible avec celui-ci.
